# EUROPÄISCHE PATENTANMELDUNG

(11) **EP 2 735 793 A2**
(43) Veröffentlichungstag der Anmeldung: **28.05.2014**
(21) Anmeldenummer: 13193617.1
(22) Anmeldetag: 20.11.2013
(51) Int. Cl.: F23D 14/62

(54) **Brenngas-Luft-Mischvorrichtung**

(30) Priorität: 26.11.2012 DE 102012023008
(71) Anmelder: Vaillant GmbH, 42859 Remscheid (DE)
(72) Erfinder: Wriske, Jochen, 42857 Remscheid (DE); Wodtke, Matthias, 42119 Wuppertal (DE); Schmidt, Nicole, 42855 Remscheid (DE)
(74) Vertreter: Hocker, Thomas

(57) **Zusammenfassung**

Die Erfindung betrifft eine Mischvorrichtung zum Mischen von Brenngas und Luft in einem definierten Mischungsverhältnis. In einem Kanal (2) ist ein Drosselmittel (3) in Form einer schwerkraftbedingt schließenden Klappe vorgesehen, die mit zunehmendem Luftmassenstrom geöffnet wird. Die Klappe ist mit einem Körper (4) verbunden, der mit einen Brenngaseinlass (5) so zusammenwirkt, dass er im Betrieb bei niedrigem Luftmassenstrom den freien Querschnitt verringert und bei großen Luftmassenstrom den freien Querschnitt weniger verringert. Dadurch ist sichergestellt, dass die Mischvorrichtung Brenngas und Luft über einen sehr weiten Modulationsbereich in einem definierten Verhältnis mischt.

## Beschreibung

Die Erfindung betrifft eine Brenngas-Luft-Mischvorrichtung für ein Heizgerät. Gattungsgemäße Mischvorrichtungen basieren auf einer Mischdüse, üblicherweise einer Venturidüse, bei der mittels eines Gebläses Luft durch die Düse gefördert wird. Im Bereich des engen Querschnitts der Venturidüse wird orthogonal Brenngas zugeführt. Über eine Drossel im Gasweg wird die für eine saubere Verbrennung benötigte Brenngasmenge im Verhältnis zur Luftmenge eingestellt. Die Venturidüse gewährleistet, dass über einen bestimmten Bereich des Luftmassenstroms das Brenngas-Luft-Verhältnis in engen Toleranzen konstant bleibt.

Dies trifft jedoch unterhalb eines Grenzwerts, bei dem die Strömungsgeschwindigkeit zu gering wird, nicht mehr zu. Für ein Heizungsgerät ist es jedoch vorteilhaft, wenn dieses über einen breiten Modulationsbereich, also einem großen Verhältnis zwischen maximaler und minimaler Leistung bei Nenn- bzw. bei Teillast verfügt. Diese Systeme sind jedoch dahingehend begrenzt, dass der sich dabei über die Venturidüse einstellende Druckverlust von Teil-zu Nennlast quadratisch verhält und dadurch das Gesamtsystem in der Nennlast durch die maximal mögliche Druckerhöhung des verwendeten Gebläses begrenzt ist.

Aus diesem Grund sind aus dem Stand der Technik verschiedene Lösungen bekannt, die auch im Teillastbereich mit geringen Leistungen ein ausreichend eng toleriertes Brenngas-Luft-Verhältnis aufweisen.

Die Patentanmeldung DE 196 35 974 A1 beschreibt eine Brenngas-Luft-Mischvorrichtung für Gasheizgeräte, bei dem der Öffnungsquerschnitt zur Brennkammer durch eine schwerkraftbelastete Pendelklappe je nach Volumenstrom angepasst wird.

Das Patent EP 1 183 483 B1 beschreibt eine Mischvorrichtung für Brenngas und Verbrennungsluft mit zwei parallelen Luftdüsen in Form von Venturidüsen. Eine oder alternativ beide Luftdüsen sind durch Absperreinrichtungen abschaltbar. Die Absperreinrichtungen sind als Klappen ausgebildet, wobei die Klappen durch Federn gegen die Strömungsrichtung gehalten werden. Die Federrate bestimmt somit die Absperrcharakteristik.

Aus der Patentanmeldung WO 2012/007823 ist eine Mischvorrichtungen bekannt, bei der ebenfalls eine Klappe im Luftweg den Strömungsquerschnitt bei Teillast verringern. Eine weitere durch den Luftdruck betätigte Klappe verschließt den Brenngasweg.

Die aus dem Stand der Technik bekannten Mischvorrichtungen haben jedoch den Nachteil, dass der durch die Geometrie bestimmte Zusammenhang zwischen Luftvolumen und Druckverlust im engen Querschnitt nur sprunghaft, aber nicht kontinuierlich verändert werden kann. Auch im Fall eines stetigen Öffnens der Absperreinrichtung in einer der Luftdüsen bleibt das für die Gaseindüsung maßgebliche Drucksignal ausschließlich von der vorliegenden, unveränderlichen Düsengeometrie abhängig. Weiterhin bewirkt das Einbringen schwerkraft- oder federbelasteter Absperreinrichtungen im Strömungsweg Regeltoleranzen, die einerseits auf ungünstige Strömungsverhältnisse und andererseits auf die Empfindlichkeit des Druckverlusts gegenüber Bauteiltoleranzen zurückzuführen ist.

Es ist daher Aufgabe der Erfindung, eine Mischvorrichtung bereitzustellen, deren Mischungsverhältnisse zwischen Brenngas und Luft bei geringer Teillast gegenüber dem Stand der Technik noch enger toleriert ist. Ziel ist es, mit einem im Venturiprinzip betriebenen pneumatischen Gas-Luft-Verbund im Teillastbetrieb ein ausreichend großes Drucksignal zu erzeugen, um eine genaue Regelung der Gasarmatur zu gewährleisten. Weiterhin ist es Aufgabe der Erfindung, im Teillastbereich bei Erhöhung des Drucksignals die Brenngaszufuhr zu drosseln und somit ein konstantes Mischungsverhältnis von Brenngas und Luft zu erzielen.

Diese Aufgabe wird erfindungsgemäß dadurch gelöst, dass eine schwerkraftbedingt schließende Klappe im Kanal der Luftzufuhr über dem Brenngaseintrittspunkt eingebracht wird. Der Öffnungswinkel der Klappe wird zum einen bestimmt durch den Luftmassenstrom, der der Schwerkraft entgegengerichtet zum Öffnen der Klappe führt und zum anderen durch das Eigengewicht der Klappe, dass zum schwerkraftbedingten Schließen führt. Ferner ist die Klappe so im Kanal der Luftzufuhr eingebracht, dass wir Schließen eine Erhöhung des, für den pneumatisch regulierenden Gas-Luft-Verbund notwendigen Drucksignals zur Folge hat. Weiterhin wird die minimale Öffnung der Klappe durch einen Anschlag begrenzt, wodurch das vollständige Schließen der Klappe verhindert wird. Des weiteren ist ein Dorn, bzw. ein dornähnlicher geometrische Körper so an der Klappe eingebracht, dass er mit dem Schließen der Klappe in den Strömungsquerschnitt des Brenngas zu führenden Kanals eindringt und diesen in der Art reduziert, dass Erhöhung des Drucksignals einerseits und Drosselung der Brenngaszufuhr andererseits stets eine konstante Mischung von Brenngas und Luft im pneumatisch regulierenden Gas-Luft-Verbund zur Folge hat.

Die Erfindung wird nun anhand der Figuren detailliert erläutert.

Es stellen dar:
- Figur 1:: eine Schnittzeichnung einer erfindungsgemäßen Mischvorrichtung in einem ersten Betriebszustand,
- Figur 2:: eine Schnittzeichnung einer erfindungsgemäßen Mischvorrichtung in einem ersten Betriebszustand.

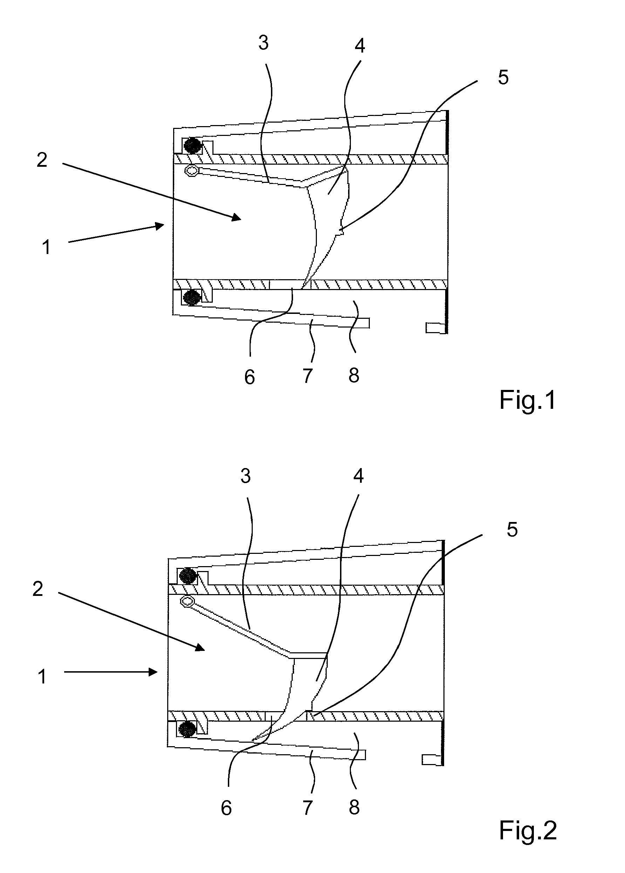

Figur 1 und 2 zeigen eine Schnittzeichnung einer erfindungsgemäßen Mischvorrichtung. Von einem linksseitig angeordneten, hier nicht dargestellten Gebläse wird Luft über eine Öffnung 1 in einen Kanal 2 gefördert. Dabei stellt Figur 1 einen Betriebszustand dar, in dem ein großer Volumenstrom gefördert wird, während in dem in Figur 2 gezeigten Betriebszustand ein geringer Volumenstrom gefördert wird. In dem Kanal 2 ist eine Klappe so drehbar angeordnet, dass mit zunehmendem Volumenstrom die Klappe entgegen ihrem Eigengewicht geöffnet wird. Die Klappe ist mit einem Körper 4 verbunden. Der Kanal 2 umfasst einen Brenngaseinlass 6, durch den Brenngas von einer von einem Mantel 7 begrenzten gasführenden Kammer 8 in den Kanal 2 einströmt und sich mit der Luft vermischt. Der Körper 4 ist in der Form eines Dorns oder Kegels ausgeführt und wirkt so mit dem Brenngaseinlass 6 zusammen, dass mit zunehmender Eindringtiefe des Körpers 4 der verbleibende freie Querschnitt des Brenngaseinlasses 6 verringert wird. Dies hat zur Folge, dass mit abnehmendem Luftvolumenstrom durch den Kanal 2 die Klappe 3 sich aufgrund ihres Eigengewichts absenkt und somit der verbleibende freie Querschnitt des Brenngaseinlasses 6 verringert wird. Dadurch wird die Brenngaszufuhr in dem Maße verringert, wie sich der Luftvolumenstrom verringert. Dadurch wird einer Anhebung des Brenngasanteils im Brenngas-Luft-Gemisch bei geringen Volumenströmen entgegengewirkt. Ein Anschlag 5 begrenzt die Bewegung der Klappe 3.

Durch die erfindungsgemäße Mischvorrichtung kann ein Heizgerät, in welchem Brenngas mit dieser Mischvorrichtung gemischt wird, in einem größeren Modulationsbereich betrieben werden, weist also ein größeres Verhältnis zwischen minimaler und maximaler Leistung auf, ohne dass das Brenngas-Luft-Gemisch in einen in Hinblick auf Wirkungsgrad oder Schadstoffemission ungünstigen Bereich kommt.

### Bezugszeichenliste

- 1: Öffnung
- 2: Kanal
- 3: Drosselmittel
- 4: Körper
- 5: Anschlag
- 6: Brenngaseinlass
- 7: Mantel
- 8: Gasführende Kammer

## Patentansprüche

1. Mischvorrichtung zum Mischen von Brenngas und Luft in einem definierten Mischungsverhältnis, umfassend einen Kanal (2), durch den Luft leitbar ist, umfassend einen Brenngaseinlass (5), der in den Kanal (2) mündet, und umfassend ein Drosselmittel (3), **dadurch gekennzeichnet, dass**
das Drosselmittel (3) durch eine schwerkraftbedingt schließende Klappe im Kanal (2) gebildet wird, die so ausgebildet ist, dass mit zunehmendem Luftmassenstrom durch den Kanal (2) das Drosselmittel (3) entgegen der Gewichtskraft des Drosselmittels (3) geöffnet wird, dass das Drosselmittel (3) mit einem Körper (4) verbunden ist, wobei der Körper (4) durch die Bewegung des Drosselmittels (3) in der Weise mit dem Brenngaseinlass (5) zusammenwirkt, dass er im Betrieb bei niedrigem Luftmassenstrom den freien Querschnitt verringert und bei großen Luftmassenstrom den freien Querschnitt weniger verringert, so dass das Mischungsverhältnis von Brenngas zu Luft über einen weiten Bereich konstant ist.

2. Mischvorrichtung nach Anspruch 1, wobei der Körper (4) dornähnlich ausgebildet ist und durch die Bewegung des Drosselmittels (3) in der Weise mit dem Brenngaseinlass (5) zusammenwirkt, dass er im Betrieb bei niedrigem Luftmassenstrom weit in den Brenngaseinlass (5) eindringt und den freien Querschnitt verringert und bei großen Luftmassenstrom weniger weit in den Brenngaseinlass (5) eindringt und den freien Querschnitt weniger verringert.

3. Mischvorrichtung nach Anspruch 1, wobei der Körper (4) und durch die Bewegung des Drosselmittels (3) in der Weise mit dem Brenngaseinlass (5) zusammenwirkt, dass er im Betrieb bei niedrigem Luftmassenstrom den Brenngaseinlass (5) mehr überdeckt und den freien Querschnitt verringert und bei großen Luftmassenstrom den Brenngaseinlass (5) weniger überdeckt und den freien Querschnitt weniger verringert.

4. Mischvorrichtung nach einem der vorhergehenden Ansprüche, wobei ein Anschlag vorgesehen ist, der so ausgebildet ist, dass er im Betrieb die Bewegung des Drosselmittels (3) und/oder des Körpers (4) bei niedrigen Luftmassenstrom begrenzt.
